# EUROPÄISCHE PATENTSCHRIFT

(11) **EP 2 766 450 B1**
(45) Veröffentlichungstag und Bekanntmachung des Hinweises auf die Patenterteilung: **12.12.2018**
(21) Anmeldenummer: 12772917.6
(22) Anmeldetag: 10.10.2012
(51) Int. Cl.: C09K 19/54, C09K 19/58

(54) **SUBSTITUIERTE AMINOALKOHOLE ALS CHIRALE DOTANDEN**
SUBSTITUTED AMINO ALCOHOLS AS CHIRAL DOPANTS
ALCOOLS AMINÉS SUBSTITUÉS EN TANT QUE DOPANTS CHIRAUX

(30) Priorität: 13.10.2011 DE 102011054473; 09.02.2012 DE 102012201962
(43) Veröffentlichungstag der Anmeldung: 20.08.2014
(73) Patentinhaber: FRAUNHOFER-GESELLSCHAFT zur Förderung der angewandten Forschung e.V., 80686 München (DE)
(72) Erfinder: BAUER, Monika, 15712 Königs-Wusterhausen (DE); HARTMANN, Lutz, 14513 Teltow (DE); KUSCHEL, Frank, 06118 Halle/S. (DE); WEISSFLOG, Wolfgang, 06122 Halle (DE)
(74) Vertreter: Strehl Schübel-Hopf & Partner
(86) Internationale Anmeldenummer: PCT/EP2012/070053
(87) Internationale Veröffentlichungsnummer: WO 2013/053752

(56) Entgegenhaltungen:
- EP-A1- 1 213 293
- EP-A1- 2 065 371
- US-A1- 2006 266 978
- ERIC C. HANSEN ET AL: "Ring Closing Enyne Metathesis: Control over Mode Selectivity and Stereoselectivity", JOURNAL OF THE AMERICAN CHEMICAL SOCIETY, Bd. 126, Nr. 46, 1. November 2004 (2004-11-01), Seiten 15074-15080, XP055053263, ISSN: 0002-7863, DOI: 10.1021/ja045422d
- JAMES H. P. UTLEY ET AL: "Electro-organic reactions. Part 42. The diastereoselective cathodic hydrodimerisation of cinnamate esters; preparative aspects", JOURNAL OF THE CHEMICAL SOCIETY, PERKIN TRANSACTIONS 1, Nr. 15, 1. Januar 1995 (1995-01-01), Seite 1961, XP055053273, ISSN: 0300-922X, DOI: 10.1039/p19950001961
- A. Ladenburg ET AL: "Über das Pseudo-Ephedrin", Berichte der deutschen chemischen Gesellschaft, 1. Januar 1889 (1889-01-01), Seiten 1823-1827, XP055053270, DOI: 10.1002/cber.18890220225 Gefunden im Internet: URL:http://onlinelibrary.wiley.com/doi/10. 1002/cber.18890220225/abstract [gefunden am 2013-02-13]
- BIALECKA-FLORJANCZYK E: "New optically active dopants for liquid crystal mixtures - (S)-1-phenylethylamine derivatives", MOLECULAR CRYSTALS AND LIQUID CRYSTALS(INC. NONLINEAR OPTICS ), GORDON AND BREACH SCIENCE PUBLISHERS, READING, GB, Bd. 82, Nr. 7, 1. Januar 1982 (1982-01-01) , Seiten 243-246, XP002094797,

## Beschreibung

Die vorliegende Erfindung betrifft substituierte chirale Aminoalkohole mit einem, vorzugsweise zwei und ggf. weiteren chiralen Zentren sowie deren Verwendung als Dotanden in Flüssigkristallen z.B. für elektrooptische Systeme.

Von den verschiedenen flüssigkristallinen Stoffzuständen beanspruchen jene, die eine helikale Überstruktur (chirale Flüssigkristallphasen) aufweisen, ein besonderes praktisches Interesse. Dazu gehören die cholesterischen (die chiral nematischen) und die chiralen smektischen (z.B. die ferroelektrischen) Phasen. Das besondere Interesse resultiert aus den bemerkenswerten optischen Eigenschaften dieser chiralen Systeme: Cholesterische Phasen weisen eine hohe optische Rotation sowie einen ausgeprägten Zirkulardichroismus auf, der durch die selektive Reflexion von zirkular polarisiertem Licht in einer cholesterischen Schicht entsteht. Es sind zahlreiche kristallinflüssige Einzelverbindungen bekannt, die in bestimmten Temperaturintervallen solche cholesterischen Zustände bilden, z.B. Cholesterylbenzoat oder (S)-4-(2-Methylbutyl)-4'-cyanbiphenyl (vergl. C.J. Booth in Handbook of Liquid Crystals, Vol.2A, 303f., Wiley-VCH, 1998). Cholesterische Systeme können aber auch aus achiralen, z.B. nematischen Phasen, durch Zusatz von chiralen Dotanden, die selbst nicht unbedingt kristallinflüssig sein müssen, induziert werden. Diese schon lange bekannte Methode (G. Friedel: Ann. Phys. (Paris) 18, 273 (1922), H. Stegemeyer, K.J. Mainusch: Chem. Phys. Lett. 6, 5 (1970)) eröffnet eine große stoffliche Variationsbreite, wie sie für praktische Anwendungen notwendig ist.

Die optischen Eigenschaften der cholesterischen Schichten, insbesondere die optische Rotation und die Wellenlänge des selektiv reflektierten Lichtes, hängen wesentlich von der Ganghöhe der Helixüberstruktur ab, die in induzierten Mischungen vorrangig durch die Konzentration des zugesetzten chiralen Dotanden gesteuert werden kann. Bei gegebener Konzentration sind diese Eigenschaften i.a. auch temperaturabhängig, was in der Thermochromie, z.B. in Form von LC-Thermographiefolien, praktisch genutzt werden kann, vergl. I. Sage in Liquid Crystals Applications and Uses, Vol. 3, 301 f., World Scientific, 1992.

Von großer praktischer Bedeutung sind displaytechnische Anwendungen, die darauf beruhen, dass die helikalen Überstrukturen in cholesterischen Schichten durch elektrische Felder reversibel verändert bzw. aufgehoben werden können. Damit eröffnet sich die Möglichkeit, die Lichttransmission oder-reflexion solcher Funktionsschichten elektrisch zu steuern, vergl. E. Jakeman et al., Phys. Lett. 39A, 69 (1972). Mit dünnen, orientierten, ferroelektrischen Schichten chiraler smektischer Flüssigkristalle lässt sich die Absorption von linear polarisiertem Licht durch Umpolung eines elektrischen Feldes verändern, so dass mit Hilfe von Polarisationsfiltern ein elektrooptisches Anzeigesystem realisiert werden kann.

Insbesondere ist es möglich, cholesterische Funktionsschichten so herzustellen, dass je nach Stärke oder Frequenz des elektrischen Feldes verschiedene optische Zustände einstellbar sind, die auch nach Abschalten der elektrischen Spannung erhalten bleiben (bistabile bzw. multistabile Displays, vergl. W. Greubel, Appl. Phys. Lett. 25 5 (1974), N.A. Clark et al., Appl. Phys. Lett. 36, 899 (1980)).

Dotanden, mit denen derartige Funktionsschichten durch chirale Induktion hergestellt werden, müssen gegenüber den achiralen Wirtsmischungen ein hohes Verdrillungsvermögen (Helical Twisting Power, HTP) aufweisen, in diesen gut löslich sein, bei Verwendung in Displays eine hohe Photostabilität besitzen, sich bei tieferen Temperaturen durch eine dauerhafte Kristallisationshemmung auszeichnen, im sichtbaren Wellenlängenbereich nicht absorbieren und bei der Displayherstellung kein störendes Adsorptionsverhalten zeigen.

Es ist ferner wünschenswert, dass Dotanden für die Induktion sowohl rechts- als auch linkshändiger Helixstrukturen in den Funktionsschichten zur Verfügung stehen. Dabei ist es vorteilhaft, wenn Substanzen gleicher chemischer Konstitution, aber unterschiedlicher Konfiguration (Enantiomere), verwendet werden können, weil diese spiegelbildliche, im Übrigen aber im Wesentlichen identische optische Eigenschaften aufweisen. Es ist bekannt, dass der optische Kontrast bistabiler cholesterischer Displays dadurch erhöht werden kann, dass die Anzeige anstelle einer Funktionsschicht zwei derartige Schichten mit entgegengesetzter Händigkeit der Helixstrukturen aufweist (Doppelschichtdisplay), vergl. M. Makow, Appl. Optics 19(8), 1274 (1980). Bei dieser Displaykonstruktion ist die Verfügbarkeit von Enantiomeren oder Diastereomeren besonders wünschenswert, weil sonst Mischungen aus chemisch unterschiedlichen Komponenten, die jeweils verschiedene Spannungs- und Temperaturabhängigkeiten der Selektivreflexion aufweisen, verwendet werden müssen, vergl. C.-M. Wu et al., Proc. IDW 455 (2008). Damit kann eine unerwünschte Einschränkung des Funktionsbereiches solcher Doppelschichtdisplays verbunden sein.

Ein weiterer Aspekt bei der Auswahl von chiralen Dotanden betrifft deren einfache und kostengünstige Synthese. Mehrstufigen Synthesen mit teuren Ausgangsstoffen bzw. Reagenzien (vergl. Eur. Pat. 1213293 (2002), M. Braun et al., Chem. Eur. J. 3405 (2005), A. Ferrarini et al., Beilstein J. Org. Chem. 5, (50) (2009), J.A. Rego et al., Liq. Cryst. 37, (1) 37 (2010)) sind aus kommerzieller Sicht solche vorzuziehen, die in wenigen übersichtlichen und konfigurationserhaltenden Schritten, ausgehend von optisch aktiven Naturstoffen bzw. enantioselektiv erzeugbaren Wirkstoffen der chemischen Industrie, zu den Zielprodukten führen.

Abgesehen von den lange Zeit verwendeten Cholesterolderivaten, die wegen ihrer Oxydationsempfindlichkeit und relativ geringen Verdrillungsstärke für technische Anwendungen wenig geeignet sind, stehen in Bezug auf das chirale Grundgerüst für die Herstellung von Hilfsstoffen mit einem breiten Anwendungsspektrum im wesentlichen drei Gruppen zur Verfügung: Derivate der Weinsäure sowie die von Aminosäuren und die von Binaphtholen abgeleiteten Verbindungen, vergl. D. Seebach et al., Angew. Chem. 113, 96 (2001) sowie DE19611101 und WO02/094805). Ausgehend von diesen Grundgerüsten sind zahlreiche Dotanden hergestellt worden, die allerdings wegen zu geringer Löslichkeit oder unzureichender Photostabilität nur in wenigen Einzelfällen für Displayanwendungen infrage kommen (M. Bauer et al., J. Soc. Inform. Display 14, 805 (2006)). Darüber hinaus sind als Dotanden Hexitester vorgeschlagen worden, die sich von hydrierten Hexosen, z.B. Dianhydrosorbit oder Dianhydromannit, ableiten (DE19625441, DE10351364). Einer Verwendung für Doppelschichtdisplays steht allerdings der Umstand entgegen, dass in dieser Stoffgruppe häufig die entsprechenden Konfigurationsisomere nicht zur Verfügung stehen.

Durch die Acylierung von L-Ephedrin mit Benzoylcyanid lässt sich O,N-Dibenzoyl-L-ephedrin gewinnen, siehe A. Dornow und H. Theidel: Neuere Ergebnisse bei Hydrierungen von α-Ketonitrilen und Isonitrosoketonen mit Lithiumaluminiumhydrid (Reduktionen mit LiAlH₄, IX. Mitteil.) in Chem. Berichte, 1955 (8), 1267-1275. Auch O,N-Diacetylephedrin ist bekannt. Weiterhin offenbart WO 2009/068284 A2 eine Reihe von Picolinsäureamid-Derivaten, in denen die Amino-Komponente ein Aminoalkohol ist, der mit Picolinsäure verestert sein kann. Diese Moleküle besitzen zwei chirale Zentren.

Dotanden mit besonders hohen HTP-Werten zeichnen sich oft durch großvolumige, sperrige Molekülstrukturen aus, wodurch allerdings die Löslichkeit in LC-Wirtsphasen verringert wird. Beispielsweise wird bei Verwendung des zur Weinsäuregruppe gehörenden TADDOLs α,α, α',α'-Tetraphenanthryl-1,3-dioxolan-4,5 dimethanol mit einem HTP-Wert von ca. 290 µm⁻¹ und einer Schmelztemperatur von 245-250°C nach einiger Zeit Auskristallisation des Dotanden im Display beobachtet.

In mehreren Schriften werden ferner die Herstellung und das Verdrillungsvermögen ein- bzw. mehrkerniger chiraler Metallkomplexe beschrieben, s. z.B. EP 1213293 A1. Insbesondere berichten M. Braun et al. in Chem. Eur. J. 11, 3405 (2005) über Titankomplexe, deren Arylimin-Liganden aus regioisomeren 2-Amino-1,1,2-triphenylethanolen hergestellt wurden. Diese Komplexe zeigen teilweise extrem hohe HTP-Werte. Allerdings liegen die Schmelztemperaturen meist oberhalb 180°C. Ferner sind enantiomerenreine Aminotriphenylethanole kommerziell entweder gar nicht oder nur zu einem hohen Preis (ca. 200€/g) erhältlich.

Aufgabe der Erfindung ist es, chirale Dotanden bereitzustellen, die in Flüssigkristallen insbesondere für elektrooptische Systeme eine hohe Verdrillung induzieren können, dabei aber die voranstehenden Nachteile der bisherigen Dotanden aus dieser Gruppe nicht aufweisen. Das chirale Grundgerüst dieser Verbindungen soll ein oder mehrere asymmetrische Kohlenstoffatome enthalten.

Überraschend konnte diese Aufgabe durch die Bereitstellung von chiralen, als Enantiomere auftretenden Aminoalkoholen mit einer oder mehreren Struktureinheiten (1) gelöst werden, worin sowohl (mindestens) eine Amino- als auch (mindestens) eine Hydroxygruppe substituiert ist. Diese lassen sich als chirale Dotanden, allein oder in Mischung mit einem oder mehreren weiteren Aminoalkoholen mit einer Struktureinheit der Formel (1) und/oder in Mischung mit einem oder mehreren anderen, beispielsweise bekannten Dotanden in einem Flüssigkristall oder einer Flüssigkristallmischung einsetzen. Die Erfindung betrifft daher sowohl die Verwendung der oben definierten Aminoalkohole für diesen Zweck als auch Flüssigkristalle und Flüssigkristallmischungen, die einen oder mehrere dieser Aminoalkohole enthalten. Außerdem betrifft sie die genannten Aminoalkohole, soweit diese neu sind.

Der Gegenstand der vorliegenden Erfindung ist der in den beiliegenden Patentansprüchen definierte Aminoalkohol sowie die in den Patentansprüchen definierte Verwendung eines Aminoalkohols.

Die Struktureinheiten (1) der für die Zwecke der Erfindung geeigneten Verbindungen lassen sich mit der nachstehenden Formel (1) darstellen 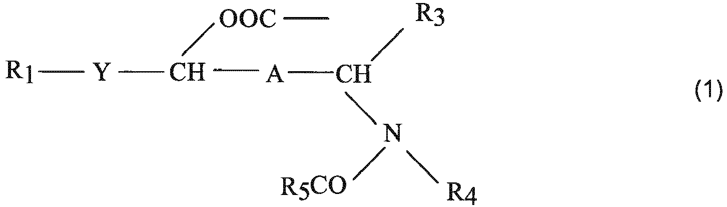 in welcher die Abkürzungen A, Y sowie R₁ und R₃ bis R5 folgende Bedeutung haben:
- A: ist eine kovalente Bindung oder eine gesättige oder ungesättigte, geradkettige, verzweigte oder einen Cyclus aufweisende Kohlenwasserstoffgruppe mit vorzugsweise 1-16 C-Atomen, vorzugsweise eine aliphatische Gruppe,
- Y: ist eine kovalente Bindung oder eine gesättige oder ungesättigte, geradkettige, verzweigte oder einen Cyclus aufweisende Kohlenswasserstoffgruppe mit vorzugsweise 1-16 C-Atomen, vorzugsweise eine aliphatische Gruppe, die an einem ihrer Enden ein Sauerstoffatom aufweisen kann, über das sie an R₁ gebunden ist,
- R₁: ist ein gesättigter oder ungesättigter, geradkettiger oder verzweigter oder einen Cyclus aufweisender aliphatischer oder ein cycloaliphatischer, ein heterocyclischer oder ein aromatischer Rest, der in allen Fällen substituiert oder unsubstituiert sein kann und/oder dessen Kohlenstoffkette durch eine oder mehrere Gruppen B unterbrochen sein kann,
- R₅: ist ausgewählt aus der Gruppe, bestehend aus
(a) gesättigten und ungesättigten, geradkettigen und verzweigten, substituierten und unsubstituierten aliphatischen Resten mit vorzugsweise 1-16 C-Atomen, wobei einzelne C-Atome durch Sauerstoffatome oder Carbonylgruppen ersetzt oder substituiert sein können, wobei die Kohlenstoffkette dieser Reste gegebenenfalls durch eine Gruppe B unterbrochen sein kann, und
(b) araliphatischen, cycloaliphatischen, aromatischen und heterocyclischen, unsubstituierten oder substituierten Resten, deren Kohlenstoffkette durch eine oder mehrere Gruppen (Strukturelemente) B und/oder durch eine oder mehrere (Kupplungs-)Gruppen D unterbrochen sein kann bzw. deren Kohlenstoffatome durch eine oder mehrere Gruppen B und/oder durch eine oder mehrere Gruppen D substituiert sein können,
- R₃, R₄: bedeuten unabhängig voneinander Wasserstoff oder einen unsubstituierten oder substituierten, geradkettigen oder verzweigten oder einen Cyclus aufweisenden aliphatischen oder einen unsubstituierten oder substituierten araliphatischen Rest, dessen Kohlenstoffkette durch eine oder mehrere Gruppen B unterbrochen sein kann,
- B: ist ausgewählt unter polymerisierbaren oder vernetzbaren Strukturelementen der Gruppe, die C₁-C₁₆-Alkenyl, C₁-C₁₆-Alkenyloxy, -C≡C-, -CH=CH-COO-, -CX=CH-COO-mit X = C₁-C₁₆- Alkyl und die trans-Form von -OOC-CH=CH-COO- umfasst,
- D: ist ausgewählt unter in der Regel zweibindigen Reste O, NH, N(CH₃), N(C₂H₅), SO₂, C(O), C(O)O, CH=CH, OC(O)O, OCH₂, CH=N, CF₂CF₂.

Sofern Reste als aliphatische Reste definiert sind, handelt es sich dabei vorzugsweise um Alkylreste. Die in der Erfindung genannten Alkylreste umfassen ihrerseits vorzugsweise 1-16 Kohlenstoffatome.

In einer spezifischen Ausführungsform der Erfindung besitzt der Aminoalkohol mit dem oder den Strukturelementen (1) die Formel (2) 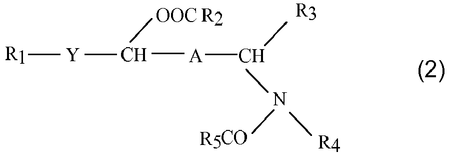 worin die Abkürzungen A, Y, R₁ und R₃ bis R₅ die Bedeutung wie oben definiert besitzen und
R₂ ein einbindiger oder ein zwei- oder mehrbindiger Rest ist, ausgewählt unter der Gruppe, bestehend aus
(a) gesättigten und ungesättigten, geradkettigen und verzweigten, substituierten und unsubstituierten aliphatischen Kohlenwasserstoffresten mit vorzugsweise 1-16 Kohlenstoffatomen, wobei einzelne C-Atome durch Sauerstoffatome oder Carbonylgruppen ersetzt oder substituiert sein können, wobei die Kohlenstoffkette dieser Reste gegebenenfalls durch eine Gruppe B wie oben definiert unterbrochen sein kann, und
(b) araliphatischen, cycloaliphatischen, aromatischen und heterocyclischen unsubstituierten oder substituierten Resten, deren Kohlenstoffkette durch eine oder mehrere Strukturelemente B und/oder durch eine oder mehrere Kupplungsgruppen D wie oben definiert unterbrochen sein können,
wobei für den Fall, dass R₂ ein zwei- oder mehrbindiger Rest ist, dieser Rest ein zweites oder mehr als zwei Strukturelemente der Formel (1) trägt.

Die Grundstruktur der Verbindungen mit den Strukturelementen (1) besitzt zwei unterschiedlich reaktive Gruppen, nämlich eine Hydroxy- und eine Aminogruppe, die in den Verbindungen der Formel (1) jeweils acyliert sind. Diese Hydroxy- und Aminogruppen besitzen eine unterschiedliche Reaktivität. Dies hat den Vorteil, dass beispielsweise Acylierungen am Stickstoffatom gegenüber solchen an der OH-Funktion bevorzugt ablaufen. Damit sind auch Dotanden mit ungleichen substituenten R₁ und R₂ durch sequentielle Acylierung leicht zugänglich, was für Dotanden auf der Basis von Weinsäure oder einer Binaphtholstruktur wesentlich schwieriger realisierbar ist.

Ein weiterer Vorteil der Verbindungen mit den Strukturelementen der Formel (1) liegt in deren geringer Kristallisationstendenz, was sich beispielsweise an der glasartigen Konsistenz der in den Beispielen 2-7 hergestellten Verbindungen zeigen lässt.

Die Reste R₂ und R₅ können unabhängig voneinander Substituenten tragen. Wenn es sich um Reste der Definition gemäß (a) oben handelt, sind Halogenatome wie Fluor, Chlor oder Brom als Substituenten bevorzugt. Wenn es sich um Reste der Definition gemäß (b) oben handelt, können die araliphatischen, cycloaliphatischen, aromatischen oder heterocyclischen Reste mit einem oder mehreren Substituenten, ausgewählt beispielsweise unter Fluor, Chlor, Brom, Cyan, Cyanmethyl, Cyanethyl, Cyanethenyl, Dicyanethenyl, Bis(alkyloxycarbonyl)ethenyl, Hydroxy, Formyl, Nitro und gesättigten oder ungesättigten, geradkettigen oder verzweigten aliphatischen Gruppen mit vorzugsweise 1-16 C-Atomen substituiert sein. In den letztgenannten aliphatischen Gruppen wiederum können C-Atome durch Sauerstoffatome oder Carbonylgruppen ersetzt oder mit Halogenatomen substituiert sein. Die aliphatischen Gruppen können unabhängig davon direkt oder über eine Kupplungsgruppe, beispielsweise mittels O, NH, NHCH₃, SO₂, CO, COO, OOC, CH=CH, C≡C, OCOO, CH=N, an die alicyclischen und aromatischen Strukturelemente gebunden sein.

Jeder Rest R₂, R₅ kann einen, gegebenenfalls (und unabhängig vom jeweils anderen Rest R₂, R₅) jedoch auch mehrere araliphatische, cycloaliphatische, aromatische oder heterocyclische Strukturelemente aufweisen. Diese können direkt oder über eine Kupplungsgruppe, beispielsweise mittels einer der genannten Gruppen D, miteinander verbunden sein.

Wenn einer oder beide Reste R₃, R₄ ein araliphatischer Rest ist/sind, kann es sich dabei um einen Benzyl- oder Phenethylrest handeln, der gegebenenfalls mit polaren und unpolaren Resten, beispielsweise Methyl, Ethyl, Methoxy, Ethoxy, Fluor, Chlor, Nitro oder Cyan, substituiert sein kann.

Der Rest R₁ trägt dann, wenn er substituiert ist, einen oder mehrere Reste, die vorzugsweise ausgewählt sind unter Alkyloxy mit vorzugsweise 1-16 C-Atomen, Hydroxy, Hydroxymethyl, Hydroxyethyl, Fluor, Chlor, Cyan und Nitro. Wenn es sich dabei um einen heterocyclischen oder einen aromatischen Rest handelt, kann dieser auch mit einer oder mehreren Alkylgruppen substituiert sein, die ihrerseits vorzugsweise 1-16 C-Atome aufweisen.

In einer bevorzugten Ausführungsform besitzen die erfindungsgemäßen Verbindungen die Formel (3) 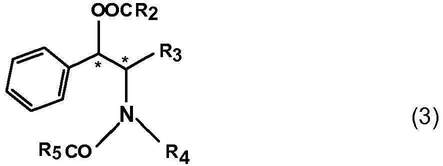 worin R₂ und R₅ gleiche oder verschiedene cycloaliphatische, aromische, heterocyclische oder Substituenten bezeichnen, die mehrere dieser Strukturelemente enthalten, und die gegebenenfalls mit einem oder mehreren Resten, ausgewählt beispielsweise unter C₁-C₁₆-Alkylgruppen, vorzugsweise C₁-C₁₂-Aikyigruppen, ausgestattet sind, und worin R₃ und R₄ gleiche oder verschiedene Substituenten sind, die Wasserstoff beziehungsweise verzweigte oder unverzweigte Alkyl- oder Alkyloxygruppen oder Benzylreste bezeichnen.

In bevorzugten Ausgestaltungen sowohl von Verbindungen der Formel (2) als auch der Formel (3) sind die Reste R₂ und R₅ der Acylierungsgruppen ausgewählt unter den folgenden Resten oder enthalten mehrere dieser Reste: 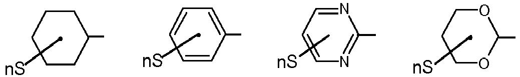 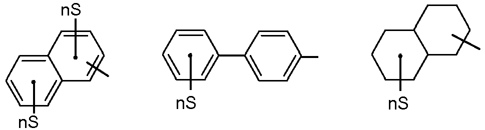 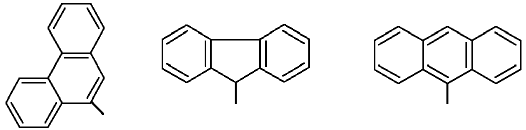 worin n 0 oder 1 oder eine ganze Zahl bis zu der Zahl bedeutet, die der maximalen Menge an möglichen Substituenten am jeweiligen Gerüst entspricht, und die Substituenten S vorzugsweise ausgewählt sind unter Fluor, Chlor, Brom, Cyan, Cyanmethyl, Cyanethyl, Cyanethenyl, Dicyanethenyl, Bis(alkyloxycarbonyl)ethenyl, Hydroxy, Formyl, Nitro und gesättigten oder ungesättigten, geradkettigen oder verzweigten aliphatischen Gruppen mit vorzugsweise 1-16 C-Atomen. In den letztgenannten aliphatischen Gruppen wieder können C-Atome durch Sauerstoffatome oder Carbonylgruppen ersetzt oder mit Halogenatomen substituiert sein.

Die chiralen Stoffe der vorliegenden Erfindung können als Bestandteile (Dotanden) flüssigkristalliner Funktionsschichten helicale (cholesterische oder smektische) Strukturen induzieren. Diese Schichten, mit denen sich sowohl die Intensität als auch die Farbe durchgehenden oder reflektierten Lichtes elektrisch steuern lässt, bilden wie erwähnt den wesentlichen Bestandteil von Flüssigkristalldisplays. Sie besitzen neben einem hohen Verdrillungsvermögen (helical twisting power, HTP) eine gute Löslichkeit in den Flüssigkristall-Basismischungen sowie eine hohe Phasenstabilität der dotierten Mischungen auch bei tiefen Temperaturen.

Insbesondere ist es bevorzugt, enantiomerenreine Ephedrine und Pseudoephedrine als relativ preiswerte chirale Aminoalkohole zu verwenden. Besonders vorteilhafte chirale Grundgerüste stellen enantiomerenreine Sympatomimetika, u.a. die Ephedrin-Pseudoephedrin-Diastereomere, dar. Letztere sowie davon abgeleitete Verbindungen haben eine besondere Bedeutung als Basen zur Enantiomerentrennung erlangt. Ferner sind die (1R,2S)-Ephedrine pharmakologisch von Interesse. Lange bekannt sind insbesondere das Dibenzoat des Ephedrins (E.R. Miller, Archiv der Pharmazie 240, 481 (1902); A. Eberhard, Archiv der Pharmazie 258, 118 (1920)) sowie die Diacetate des (-)-Ephedrins und des (+)-Pseudoephedrins (H. Bretschneider et al., Monatsh. Chem. 81, 31 (1950)). Ferner ist über die Acylierung von 1,2-Aminoalkoholen mit ungesättigten Alkylmono- und Alkylendicarbonsäuren berichtet worden (D. Lee et al., J. Am. Chem. Soc. 121, 10648 (1999)). Mitteilungen über eine Induktion chiraler Flüssigkristallphasen durch solche Verbindungen sind bisher nicht bekannt geworden.

Spezifische, bevorzugte Ausführungsformen der Erfindung sind in den Unteransprüchen angegeben; eine Reihe von chiralen Aminoalkoholen, die in dieser Erfindung erstmals offenbart sind, sind in einem nebengeordneten Anspruch und dessen Unteransprüchen beansprucht.

Die Erfindung wird durch die nachfolgenden Beispiele veranschaulicht, ohne jedoch darauf beschränkt zu sein.

Dabei wurden folgende allgemeine Arbeitstechniken angewendet:
Die Reaktionsverläufe und -produkte werden dünnschichtchromatographisch mit Polygram Sil G/UV-Dünnschichtplatten (Macherey-Nagel) im UV-Licht bzw. nach Entwicklung mit einer KMnO4-Lsg. geprüft.

Zur Trennung mittels Säulenchromatographie bei Normaldruck wird Kieselgel 60M, 0.04 - 0.63 mm (Macherey-Nagel), verwendet.

Schmelztemperaturen werden mikroskopisch am Heiztischpräparat ermittelt; sie sind unkorrigiert.

1H- und 13C-NMR Spektren werden mit einem Varian 300 MHz-Gerät gemessen; TMS dient als interner Standard.

Eine qualitative Prüfung des chiralen Induktionsvermögens wird mit mikroskopischen Kontaktpräparaten unter Verwendung der nematischen Basismischung MLC-6650 (Merck KGaA) vorgenommen. Bei hinreichender Induktionswirkung des Reaktionsproduktes treten in den Kontaktzonen visuell deutlich sichtbare Farbsäume auf.

Die Bestimmung der HTP-Werte erfolgt nach der Grandjean-Cano-Methode unter Verwendung von uniaxial geriebenen Plankonvex-Zylinderlinsen und ebenen Quarzplatten. Aus der Verschiebungsrichtung der vom orientierten Linsenpräparat erzeugten Interferenzstreifen bei Drehung des Analysators am Polarisationsmikroskop ergibt sich der Drehsinn der induzierten Helices (vergl. P.R. Gerber, Z. Naturforsch. 35a, 619 (1980)). Die Messungen werden mit ca. 1%igen Lösungen der Dotanden in den nematischen Wirtsmischungen MLC-6650, ZLI-00-1795 und E7 (Merck KGaA) sowie ZOC-1020XX (Chisso Co.) durchgeführt. Die HTP-Werte beziehen sich auf 1 Masse-% des Dotanden in der kristallin-flüssigen Lösung.

### Ausführungsbeispiele

Transmissionsmessungen an zwischen Glasobjektträgern gefertigten cholesterischen Dünnschichtpräparaten wurden mit einem Spektrometer des Typs Ocean Optics USB2000+XR1-ES durchgeführt. Für die Untersuchung der Temperaturabhängigkeit der Transmissionsminima wurde zusätzlich ein regelbarer Heiztisch verwendet.

### Beispiel 1

### (1R,2S)-2-(N-(4-trans-n-Pentylcyclohexylcarbonyl)-methylamino)-1-(4-trans-n-pentylcyclohexylcarbonyloxy)-1-phenyl-propan (Verbindung I).

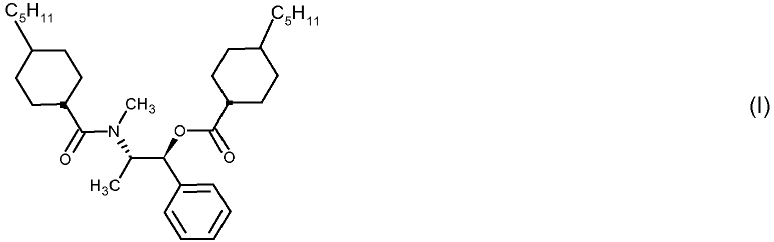

Das dazu verwendete 4-trans-n-Pentylcyclohexylcarbonsäurechlorid wird aus 7,2 g (36 mmol) der entsprechenden Säure durch Umsetzung mit 9,4 g (74 mmol) Oxalylchlorid in Toluollösung nach Abdestillieren überschüssigen Oxalylchlorids erhalten. Zum Rückstand wird eine Lösung von 3 g (18 mmol) (1R,2S)-(-)- 2-Methylamino-1-phenyl-1-propanol ((1R,2S)-(-)-Ephedrin) sowie 12 mL Triethylamin in Toluol bei ca. 5°C eingetropft. Dann wird 4 Std. bei Raumtemperatur und 12 Std. bei 85°C gerührt und das Reaktionsgut wie folgt aufgearbeitet: Nach Zusatz von 10 mL Wasser wird mit 10 mL verd. HCl angesäuert und die organische Schicht abgetrennt, mehrfach mit Wasser gewaschen, über MgSO₄ getrocknet und vom Lösungsmittel befreit. 3,3 g (35% Ausbeute) des Reaktionsproduktes werden nach zweifachem Umkristallisieren mit Methanol erhalten; Schmelztemperatur 85-87°C. Das entstandene Produkt induziert nach Zusatz zu nematischen Flüssigkristallen cholesterische Phasen, die im Bereich des sichtbaren Lichtes selektiv reflektieren.

### Beispiel 2

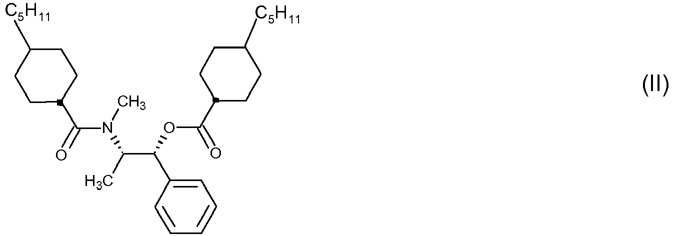

(1S,2S)- 2-(N-(4-trans-n-Pentylcyclohexylcarbonyl)-methylamino)-1-(4-trans-n-pentylcyclohexylcarbonyloxy)-1-phenyl-propan (Verbindung II) wird analog Beispiel 1 aus 4-trans-n-Pentylcyclohexancarbonsäure und (1S,2S)-(+)-2-Methylamino-1-phenyl-1-propanol ((1S,2S)-(+)-Pseudoephedrin) hergestellt. Das Rohprodukt wird säulenchromatographisch (Elutionslösung Toluol/Essigester 5:1) sowie anschließend durch Umfällen mit Methanol gereinigt. Es entsteht ein glasartig erstarrendes Produkt mit einer Ausbeute von 29%.

### Beispiel 3

### (1R,2S)-(-)-2-(N-(6-n-Hexyloxynaphthyl-2-carbonyl)-methylamino)-1-(6-n-hexyloxynaphthyl-2-carbonyloxy)-1-phenyl-propan (Verbindung III)

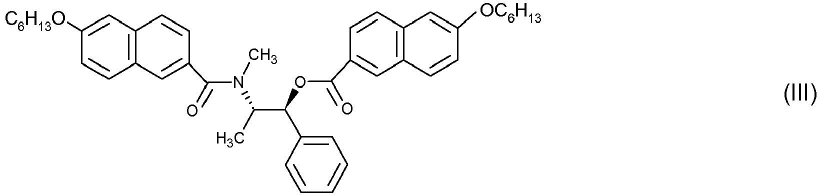

wird analog Beispiel 1 aus 6-n-Hexyloxy-2-naphthoesäure und (1R,2S)-2-Methylamino-1-phenyl-1-propanol ((1R,2S)-(-)-Ephedrin) hergestellt. Das sirupartige rotbraune Rohprodukt wird mittels Kieselsäule (Elutionslösung Toluol/Essigester 5:1) gereinigt, wobei sich ein glasartig erstarrendes Endprodukt ergibt. Die Ausbeute beträgt 20%.

### Beispiel 4

Wenn entsprechend Beispiel 3 anstelle des Ephedrins (1S,2S)-(+)- 2-Methylamino-1-phenyl-1-propanol ((1S,2S)-(+)-Pseudoephedrin) eingesetzt wird, entsteht ein honiggelbes Rohprodukt, dessen Reinigung ein glasartig erstarrendes Endprodukt (Verbindung IV) mit einer Ausbeute von 20% liefert.

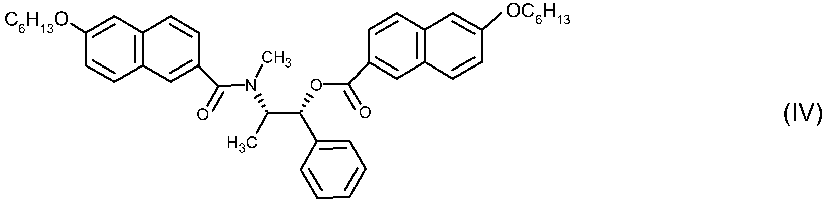

### Beispiel 4a

Ein Diastereomeres wird entsprechend Beispiel 1 aus 6-n-Hexyloxy-2-naphthoesäurechlorid und (1R,2R)-(-)Pseudoephedrin hergestellt. Das Produkt induziert nach Dotierung nematischer Mischungen cholesterische Phasen mit Selektivreflexion im sichtbaren Licht.

### Beispiel 5

(1R,2R)-(-)-Pseudoephedrin wird entsprechend Beispiel 1 mit 4'-Cyano-(1,1'-biphenyl)-4-carbonsäurechlorid acyliert. Dabei entsteht nach säulenchromatographischer Reinigung (Elution nacheinander mit Toluol/Essigester 5:1 und Toluol/Essigester 1:1) (1R,2R)-(-)- 2-(N-(4'-Cyan-1,1'-biphenyl-4-carbonyl)-methylamino)-1-(4'-cyan-1,1'-biphenyl-4-carbonyloxy)-1-phenylpropan (Verbindung V) 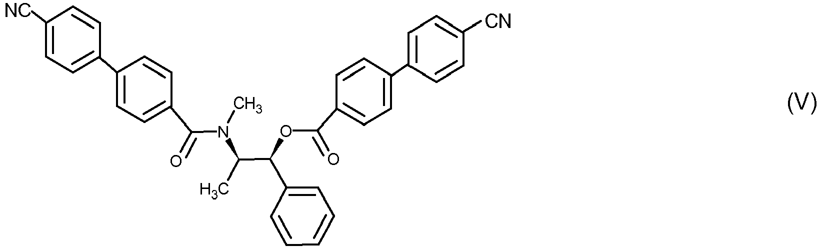 als hellgelbes, glasartiges Produkt mit einer Ausbeute von 22%.

### Beispiel 6

Analog Beispiel 1 wird (1R,2R)-(-)-Pseudoephedrin mit dem aus 2,5-Bis(4-n-propyloxyphenylcarbonyloxy) Benzoesäure hergestellten Säurechlorid umgesetzt. Nach der säulenchromatographischen Trennung des Rohproduktes durch Elution mit Toluol/Essigester (5:1) wird die Verbindung VI (Ausbeute 26%) als glasartig erstarrendes Zielprodukt erhalten.

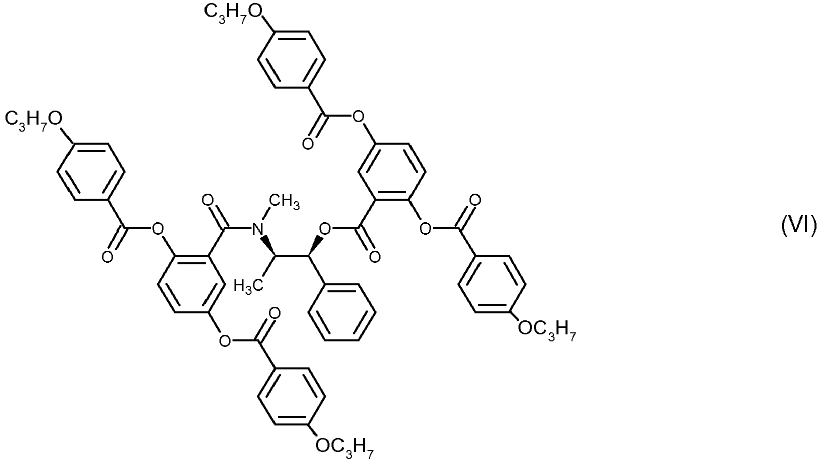

### Beispiel 7

A. Zwecks Synthese eines Dotanden mit ungleichen Substituenten R₁ und R₂ werden zunächst je 25 mmol (1R,2R)-(-)-Pseudoephedrin und 4-trans-n-Pentylcyclohexancarbonsäurechlorid analog Beispiel 1 zur Reaktion gebracht. Nach der üblichen Aufarbeitung des Reaktionsgutes erhält man (1R,2R)-2-(N-(4-trans-n-Pentylcyclohexylcarbonyl)-methylamino)-1-phenyl-1-propanol als farbloses, honigartiges Rohprodukt, das bei Raumtemperatur allmählich kristallisiert. Nach Umkristallisieren mit n-Hexan entsteht ein weißes, kristallines Produkt mit einer Ausbeute von 85%, Schmelzpunkt 89-92°C.
B. Das nach A. monoacylierte Pseudoephedrin wird in benzolischer Lösung in Gegenwart von Triethylamin mit 4'-Cyan-1,1'-biphenyl-4-carbonsäurechlorid während 16 Stunden unter Rühren bei 80°C umgesetzt. Die säulenchromatographische Aufarbeitung des Rohproduktes (Elution mit Toluol/Essigester 8:1) ergibt nach Abtrennung des Lösungsmittels das glasartige Zielprodukt (1R,2R)-2-(N-(4-trans-n-Pentylcyclohexylcarbonyl)methylamino)-1-(4'-cyan-1,1'-biphenyl-4-carbonyloxy)-1-phenyl-propan (Verbindung VII) in einer Ausbeute von 60% (bezogen auf Pseudoephedrin).

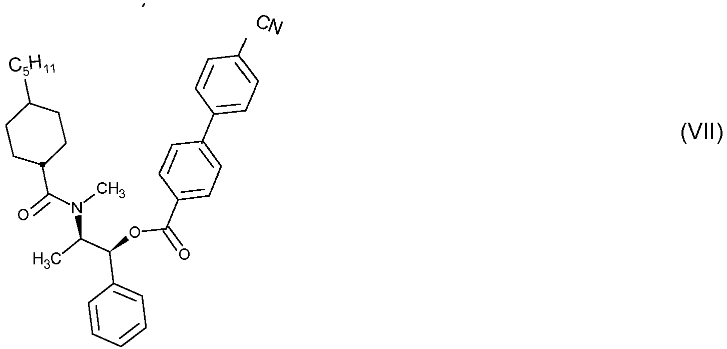

### Beispiel 8

### (1R,2R)-2-(N-(4-trans-n-Pentyl-cyclohexylcarbonyl)methylamino)-1-(6-n-hexyloxynaphthyl-2-carbonyloxy)-1-phenyl-propan (Verbindung VIII)

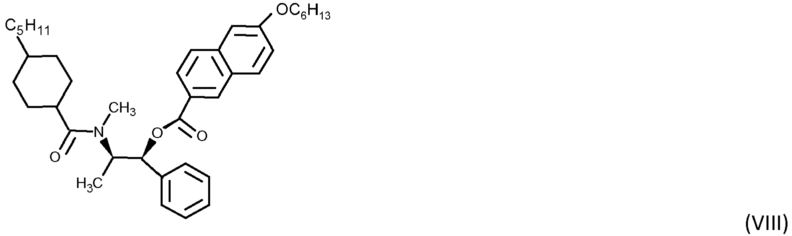

Das entsprechend Beispiel 7A hergestellte (1R,2R)-2-(N-(4-trans-n-Pentylcyclohexylcarbonyl)-methylamino)-1-phenyl-1-propanol wird in benzolischer Lösung in Gegenwart von Triethylamin mit 6-n-Hexyloxy-2-naphthoesäurechlorid zuerst bei Raumtemperatur und danach bei 70°C während 24 Stunden verestert. Die im Beispiel 1 beschriebene Aufarbeitung des Reaktionsgutes ergibt ein sirupartiges Rohprodukt, nach dessen säulenchromatographischer Reinigung (Elution mit Toluol/Essigester 5:1) das glasartige Zielprodukt in 65%iger Ausbeute (bezogen auf Pseudoephedrin) erhalten wird, dass auch nach längerer Lagerung nicht kristallisiert.

### Beispiel 9

### 4,4'-Hexandiyldioxy-di-benzoesäure-di-((1R,2R)-2-(N-(4-trans-n-pentylcyclohexylcarbonyl)-methylamino)-1-phenyl-1-propylester) (Verbindung IX)

Der nach Beispiel 7A hergestellte monosubstituierte Aminoalkohol wird mit der halben Äquivalentmenge 4,4'-Hexylendioxydibenzoylchlorid in Toluollösung und in Gegenwart von Triethylamin unter Rühren 4 Tage bei 90°C umgesetzt. Das gelbe, honigartige Rohprodukt liefert nach säulenchromatographischer Reinigung (Kieselgel, Elution mit Toluol/Essigester 2:1) die glasartige Verbindung IX mit einer Ausbeute von 35%.

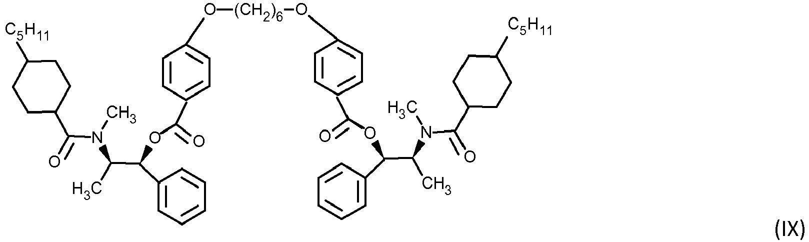

### Beispiel 10

### Naphthalindicarbonsäure-(2,6)-di-((1R,2R)-2-(N-(4-trans-n-pentylcyclohexylcarbonyl)-methylamino)-1-phenyl-1-propylester) (Verbindung X)

Der nach Beispiel 7A hergestellte monoacylierte Aminoalkohol wird in Toluol gelöst und in Gegenwart von Triethylamin mit Naphthalin-2,6-dicarbonsäurechlorid während 40 Stunden unter Rühren bei 80°C umgesetzt. Die säulenchromatographische Reinigung des nach üblicher Aufarbeitung entstandenen Rohproduktes (Kieselgel, Elution mit Toluol/Essigester 3:1) liefert das glasartig erstarrende Endprodukt mit einer Ausbeute von 30%.

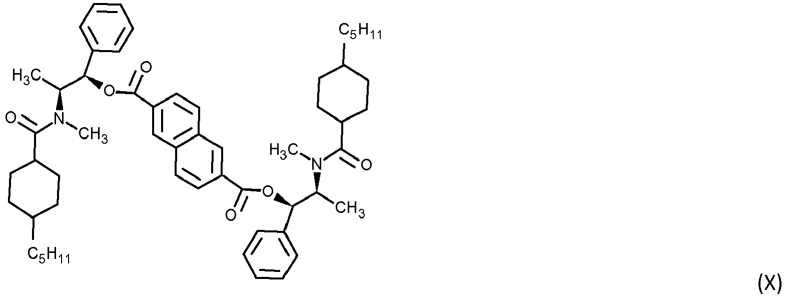

Die HTP-Werte der in den Beispielen 1 bis 10 hergestellten Verbindungen sind in der nachfolgenden Tabelle 1 aufgeführt.

**Tabelle 1**

| **Verbindung** | **Hostmischung** | **HTP/µm-1** | **Drehsinn** |
|---|---|---|---|
| I | MLC-6650 | 10 | links |
| II | MLC-6650 | 22 | rechts |
| III | MLC-6650 | 10 | links |
| IV | MLC-6650 | 17 | rechts |
| V | MLC-6650 | 15 | rechts |
| VI | MLC-6650 | 8 | rechts |
| VII | MLC-6650 | 44 | links |
| VII | ZOC-1020XX | 31 | links |
| VII | E7 | 40 | links |
| VII | MDA-00-1795 | 40 | links |
| VIII | MLC-6650 | 25 | links |
| IX | MLC-6650 | 20 | links |
| X | MLC-6650 | 27 | links |

### Beispiel 11

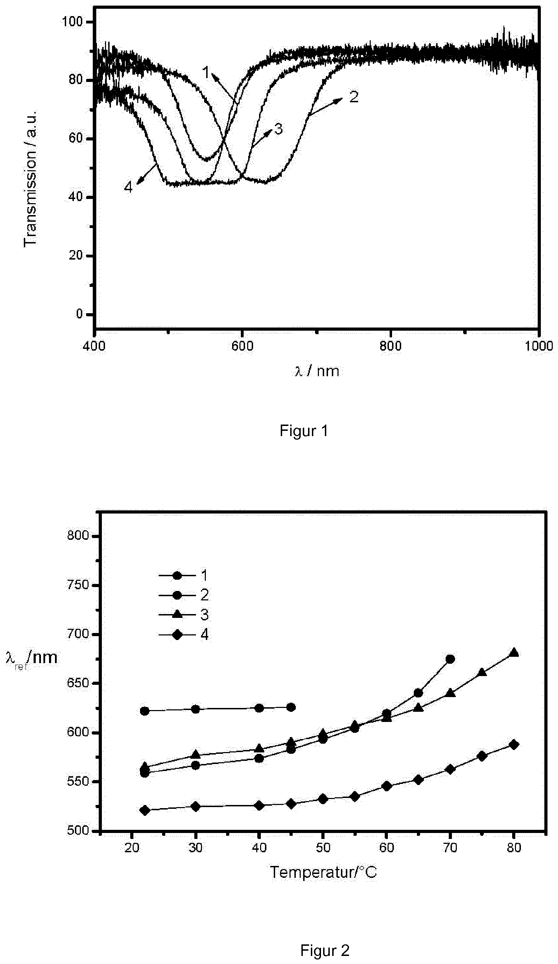

Unter Verwendung der Verbindung VII wurden die in der Tabelle 2 aufgeführten cholesterischen Mischungen hergestellt. Transmissionsmessungen an daraus gefertigten Dünnschichtpräparaten zwischen Glasobjektträgern ergeben bei Raumtemperatur die in Figur 1 dargestellte Wellenlängenabhängigkeit im sichtbaren Spektralbereich.

**Tabelle 2**

| **Mischung** | **Host** | **Dotand** | **Dotandgehalt/Ma-%** |
|---|---|---|---|
| 1 | MLC-6650 | VII | 5,8 |
| 2 | E7 | VII | 5,8 |
| 3 | MDA-00-1795 | VII | 6,1 |
| 4 | ZOC-1020XX | VII | 7,6 |

Mit den verwendeten Dünnschichtpräparaten wurde weiterhin die Temperaturabhängigkeit der Transmissionsminima (siehe Figur 1) gemessen. Die Ergebnisse sind in Figur 2 dargestellt.

Proben der in Beispiel 8 verwendeten cholesterischen Mischungen wurden zur Prüfung der Phasenstabilität 120 Stunden bei Raumtemperatur, bei 0°C sowie bei -20°C aufbewahrt. Nach dieser Zeit wurden keine Ausscheidungen bzw. irreversiblen Farbänderungen beobachtet.

## Patentansprüche

1. Verwendung eines substituierten, chiralen Aminoalkohols, umfassend eine oder mehrere Struktureinheiten der nachstehenden Formel (1) 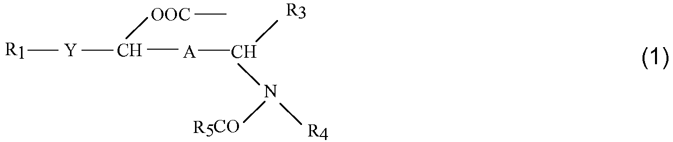 in welcher die Abkürzungen A, Y, R₁ und R₃ bis R₅ folgende Bedeutung haben:
A ist eine kovalente Bindung oder eine gesättigte oder ungesättigte, geradkettige, verzweigte oder einen Cyclus aufweisende Kohlenwasserstoffgruppe,
Y ist eine kovalente Bindung oder eine gesättigte oder ungesättigte, geradkettige, verzweigte oder einen Cyclus aufweisende Kohlenwasserstoffgruppe, die an einem ihrer Enden ein Sauerstoffatom aufweisen kann, über das sie an R₁ gebunden ist,
R₁ ist ein gesättigter oder ungesättigter, geradkettiger oder verzweigter oder einen Cyclus aufweisender aliphatischer oder ein heterocyclischer oder ein aromatischer Rest, der in allen Fällen substituiert oder unsubstituiert ist und/oder dessen Kohlenstoffkette durch eine oder mehrere Gruppen B unterbrochen sein kann,
R₅ ist ausgewählt aus der Gruppe, bestehend aus
(a) gesättigten und ungesättigten, geradkettigen und verzweigten, substituierten und unsubstituierten aliphatischen Resten, wobei einzelne C-Atome durch Sauerstoffatome oder Carbonylgruppen ersetzt sein können, wobei die Kohlenstoffkette dieser Reste gegebenenfalls durch eine Gruppe B unterbrochen sein kann, und
(b) araliphatischen, cycloaliphatischen, aromatischen und heterocyclischen unsubstituierten oder substituierten Resten, deren Kohlenstoffkette durch eine oder mehrere Gruppen B und/oder durch eine oder mehrere Gruppen D unterbrochen sein kann,
R₃, R₄ bedeuten unabhängig voneinander Wasserstoff oder einen unsubstituierten oder substituierten, geradkettigen oder verzweigten oder einen Cyclus aufweisenden aliphatischen oder einen unsubstituierten oder substituierten araliphatischen Substituenten, dessen Kohlenstoffkette durch eine oder mehrere Gruppen B unterbrochen sein kann,
B ist ausgewählt unter polymerisierbaren oder vernetzbaren Strukturelementen der Gruppe, die C₁-C₁₆-Alkenyl, C₁-C₁₆-Alkenyloxy, -C≡C-, -CH=CH-COO-, -CH=CH-, -CX=CH-COO- mit X = C₁-C₁₆- Alkyl und die trans-Form von -OOC-CH=CH-COO-umfasst,
D ist ausgewählt unter -O-, -NH-, -N(CH₃)-, -N(C₂H₅)-, -SO₂-, -CO-, -COO-, -CH=CH-, -OCOO-, -OCH₂-, CH=N, -CF₂CF₂-,
als chiraler Dotand, allein oder in Mischung mit einem oder mehreren weiteren Aminoalkoholen mit einer Struktureinheit der Formel (1) oder in Mischung mit einem anderen Dotanden, in einem Flüssigkristall oder einer Flüssigkristall-Mischung.

2. Verwendung nach Anspruch 1, worin der Aminoalkohol die Formel (2) besitzt: 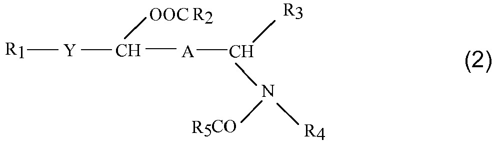 worin die Abkürzungen A, Y, R₁ und R₃ bis R₅ die Bedeutung wie in Anspruch 1 definiert besitzen und
R₂ ein einbindiger oder ein zwei- oder mehrbindiger Rest ist, ausgewählt unter der Gruppe, bestehend aus
(a) gesättigten und ungesättigten, geradkettigen und verzweigten, substituierten und unsubstituierten aliphatischen Kohlenwasserstoffresten, wobei einzelne C-Atome durch Sauerstoffatome oder Carbonylgruppen ersetzt sein können, wobei die Kohlenstoffkette dieser Reste gegebenenfalls durch eine Gruppe B wie oben definiert unterbrochen sein kann, und
(b) araliphatischen, cycloaliphatischen, aromatischen und heterocyclischen unsubstituierten oder substituierten Resten, deren Kohlenstoffkette durch eine oder mehrere Gruppen B und/oder durch eine oder mehrere Gruppen D wie oben definiert unterbrochen sein können,
wobei für den Fall, dass R₂ ein zwei- oder mehrbindiger Rest ist, dieser Rest ein zweites oder mehr als zwei Strukturelemente der Formel (1) trägt.

3. Verwendung nach einem der voranstehenden Ansprüche, worin einer oder beide der Reste R₂, R₅ ein oder mehrere araliphatische(s), cycloaliphatische(s), aromatische(s) und/oder heterocyclische(s) Strukturelement(e) aufweisen, wobei im Falle des Vorhandenseins mehrerer solcher Strukturelemente diese direkt oder über eine Kupplungsgruppe D wie für Anspruch 1 definiert miteinander verbunden sind.

4. Verwendung nach einem der voranstehenden Ansprüche, worin R₂ und R₅ ausgewählt sind unter den folgenden Resten oder mehrere dieser Reste enthalten: 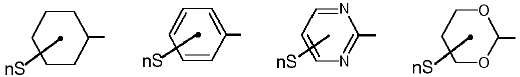 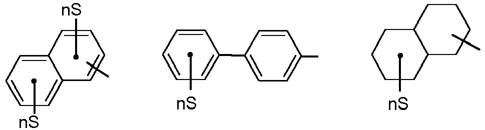 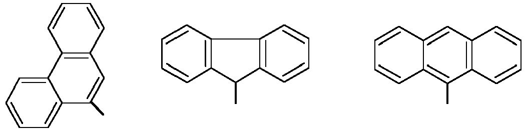 worin n 0 oder 1 oder eine ganze Zahl bis zu der Zahl bedeutet, die der maximalen Menge an möglichen Substituenten am jeweiligen Gerüst entspricht, und jeder Substituent S unabhängig von anderen Substituenten S ausgewählt ist unter Fluor, Chlor, Brom, Cyan, Cyanmethyl, Cyanethyl, Cyanethenyl, Dicyanethenyl, Bis(alkyloxycarbonyl)ethenyl, Hydroxy, Formyl, Nitro und gesättigten oder ungesättigten, geradkettigen oder verzweigten aliphatischen Gruppen mit vorzugsweise 1-16 C-Atomen.

5. Verwendung nach einem der voranstehenden Ansprüche, worin R₁-Y- einen Phenylrest darstellt.

6. Verwendung nach Anspruch 1, worin der chirale Aminoalkohol die nachstehende Formel (3) besitzt, 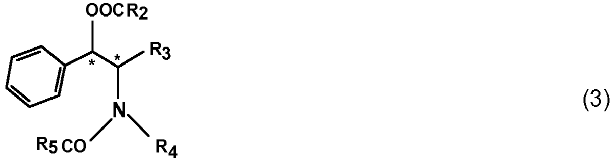 in der R₂ und R₅ gleiche oder verschiedene cycloaliphatische, aromatische, heterocyclische oder Substituenten bezeichnen, die mehrere dieser Strukturelemente enthalten, und die gegebenenfalls mit einem oder mehreren Resten, ausgewählt unter C₁-C₁₆-Alkylgruppen, ausgestattet sind, und in der R₃ und R₄ gleiche oder verschiedene Substituenten sind, die Wasserstoff beziehungsweise verzweigte oder unverzweigte Alkyl- oder Alkyloxygruppen oder Benzyl- oder Phenethylreste bezeichnen.

7. Verwendung nach Anspruch 2, worin der Rest R₂ genau zwei Strukturelemente der Formel (1) aufweist.

8. Verwendung nach Anspruch 7, worin der chirale Aminoalkohol der Formel (2) Spiegelsymmetrie aufweist.

9. Verwendung nach Anspruch 7 oder 8, **dadurch gekennzeichnet, dass** R₂ die Bedeutung
L₁-F₁-L₂-F₂-L₃
besitzt, wobei
L₁, L₂, L₃ unabhängig voneinander ausgewählt sind aus der Gruppe bestehend aus einer einfachen kovalenten Bindung, geradkettigem oder verzweigtem Alkylen mit
1-16 C-Atomen, welches optional mit OH, F, Cl, Br, CN, oder NO₂ substituiert ist, und/oder worin einzelne CH₂-Glieder durch O oder S ersetzt sein können, -COO-, -CH=CH-, -CH=N-, -N=N-, -CΞC-, und
F₁ und F₂ unabhängig voneinander ausgewählt sind aus der Gruppe bestehend aus einer Einfachbindung und unsubstituierten oder substituierten alicyclischen, heterocyclischen, und aromatischen Einheiten.

10. Verwendung nach einem der voranstehenden Ansprüche, worin der dotierte Flüssigkristall bzw. die dotierte Flüssigkristall-Mischung in einem elektrooptischen System, insbesondere in einem Display, und besonders bevorzugt in einem bistabilen reflektiven Display eingesetzt wird.

11. Verwendung nach Anspruch 10, wobei zwei oder ein Mehrfaches von zwei FlüssigkristallMischungen in Doppelschichtdisplays eingesetzt werden, von denen jeweils zwei ein Enantiomer oder Diastereomer eines Aminoalkohols mit dem Strukturelement der Formel (1) nach einem der Ansprüche 1-9 enthalten, derart, dass die beiden Mischungen entgegengesetzten Drehsinn aufweisen.

12. Substituierter, chiraler Aminoalkohol, umfassend eine oder mehrere Struktureinheiten der der nachstehenden Formel (1) 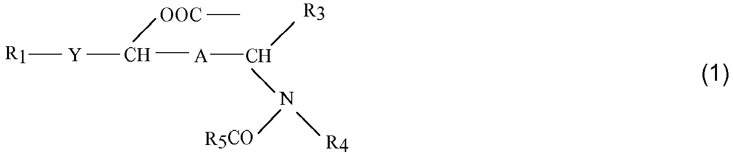 in welcher die Abkürzungen A, Y, R₁ und R₃ bis R₅ folgende Bedeutung haben:
A ist eine kovalente Bindung oder eine gesättigte oder ungesättigte, geradkettige, verzweigte oder einen Cyclus aufweisende Kohlenwasserstoffgruppe,
Y ist eine kovalente Bindung oder eine gesättigte oder ungesättigte, geradkettige, verzweigte oder einen Cyclus aufweisende Kohlenwasserstoffgruppe, die an einem ihrer Enden ein Sauerstoffatom aufweisen kann, über das sie an R₁ gebunden ist,
R₁ ist ein gesättigter oder ungesättigter, geradkettiger oder verzweigter oder einen Cyclus aufweisender aliphatischer oder ein heterocyclischer oder ein aromatischer Rest, der in allen Fällen substituiert oder unsubstituiert ist und/oder dessen Kohlenstoffkette durch eine oder mehrere Gruppen B unterbrochen sein kann,
R₅ ist ausgewählt aus der Gruppe, bestehend aus
(a) araliphatischen und cycloaliphatischen unsubstituierten oder substituierten Resten, deren Kohlenstoffkette durch eine oder mehrere Gruppen B und/oder durch eine oder mehrere Gruppen D unterbrochen sein können, und
(b) aromatischen und heterocyclischen Resten, die mit einem oder mehreren Substitenten substituiert sind, ausgewählt unter Cyan, Cyanmethyl, Cyanethyl, Cyanethenyl, Dicyanethenyl, Bis(alkyloxycarbonyl)ethenyl, Hydroxy, Formyl, Nitro, ungesättigten, geradkettigen oder verzweigten aliphatischen Gruppen, in denen ein oder mehrere C-Atome durch Sauerstoffatome oder Carbonylgruppen ersetzt oder mit Halogenatomen substituiert sein können und/oder in denen die aliphatische Gruppe direkt oder über eine Kupplungsgruppe, vorzugsweise ausgewählt unter O, NH, NCH₃, SO₂, CO, COO, OOC, CH=CH, C≡C, OCOO, CH=N, an den aromatischen oder heterocyclischen Rest gebunden sein kann, und gesättigten, geradkettigen oder verzweigten aliphatischen Gruppen, in denen C-Atome durch Sauerstoffatome oder Carbonylgruppen ersetzt oder mit Halogenatomen substituiert sind und/oder in denen die aliphatische Gruppe direkt oder über eine Kupplungsgruppe, ausgewählt unter O, NH, NCH₃, SO₂, CO, COO, OOC, CH=CH, C≡C, OCOO, CH=N, an den aromatischen oder heterocyclischen Rest gebunden ist,
R₃, R₄ bedeuten unabhängig voneinander Wasserstoff oder einen unsubstituierten oder substituierten, geradkettigen oder verzweigten oder einen Cyclus aufweisenden aliphatischen oder einen unsubstituierten oder substituierten araliphatischen Substituenten, dessen Kohlenstoffkette durch eine oder mehrere Gruppen B unterbrochen sein kann,
B ist ausgewählt unter polymerisierbaren oder vernetzbaren Strukturelementen der Gruppe, die C₁-C₁₆-Alkenyl, C₁-C₁₆-Alkenyloxy, -C≡C-, -CH=CH-COO-, -CH=CH-, -CX=CH-COO- mit X = C₁-C₁₆- Alkyl und die trans-Form von -OOC-CH=CH-COO-umfasst,
D ist ausgewählt unter -O-, -NH-, -N(CH₃)-, -N(C₂H₅)-, -SO₂-, -CO-, -COO-, -CH=CH-, -OCOO-, -OCH₂-, CH=N, -CF₂CF₂-.

13. Substituierter, chiraler Aminoalkohol nach Anspruch 12, der die Formel (2) besitzt: 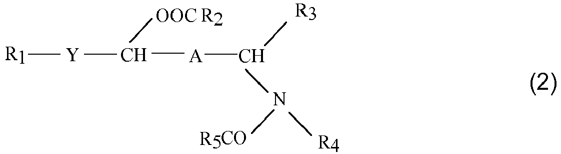 worin die Abkürzungen A, Y, R₁ und R₃ bis R₅ die Bedeutung wie in Anspruch 12 definiert besitzen und
R₂ ein einbindiger oder ein zwei- oder mehrbindiger Rest ist, ausgewählt unter der Gruppe, bestehend aus
(a) gesättigten und ungesättigten, geradkettigen und verzweigten, substituierten und unsubstituierten aliphatischen Kohlenwasserstoffresten, wobei einzelne C-Atome durch Sauerstoffatome oder Carbonylgruppen ersetzt sein können, wobei die Kohlenstoffkette dieser Reste gegebenenfalls durch eine Gruppe B wie oben definiert unterbrochen sein kann, und
(b) araliphatischen, cycloaliphatischen, aromatischen und heterocyclischen, unsubstituierten oder substituierten Resten, deren Kohlenstoffkette durch eine oder mehrere Gruppen B und/oder durch eine oder mehrere Gruppen D wie oben definiert unterbrochen sein können,
wobei für den Fall, dass R₂ ein zwei- oder mehrbindiger Rest ist, dieser Rest ein zweites oder mehr als zwei Strukturelemente der Formel (1) trägt.

14. Substituierter, chiraler Aminoalkohol nach Anspruch 13 mit zwei Strukturelementen der Formel (2), **dadurch gekennzeichnet, dass** R₂ die Bedeutung
L₁-F₁-L₂-F₂-L₃
besitzt,
wobei L₁, L₂, L₃ unabhängig voneinander ausgewählt sind aus der Gruppe bestehend aus einer einfachen kovalenten Bindung, geradkettigem oder verzweigtem Alkylen mit vorzugsweise 1-16 C-Atomen, welches optional mit OH, F, Cl, Br, CN, oder NO₂ substituiert ist, und/oder worin einzelne CH₂-Glieder durch O oder S ersetzt sein können, -COO-, -CH=CH-, -CH=N-, -N=N-, -CΞC-, und
F₁ und F₂ unabhängig voneinander ausgewählt sind aus der Gruppe bestehend aus einer Einfachbindung und unsubstituierten oder substituierten alicyclischen, heterocyclischen, und aromatischen Einheiten.

15. Substituierter chiraler Aminoalkohol nach Anspruch 14, worin die unsubstituierten oder substituierten alicyclischen, heterocyclischen und aromatischen Einheiten ausgewählt sind unter F₁ und F₂ unabhängig voneinander ausgewählt sind unter 1,4-Cyclohexylen, 2,5-Pyrimidylen, 1,4-Phenylen und 2,6-Naphthylen, und/oder worin diese Einheiten mit mindestens einem Substituenten, ausgewählt unter F, Cl, Br, CN, NO₂, substituiert sind.

## Claims

1. Use of the substituted, chiral amino alcohols comprising one or more structural units of the following formula (1) 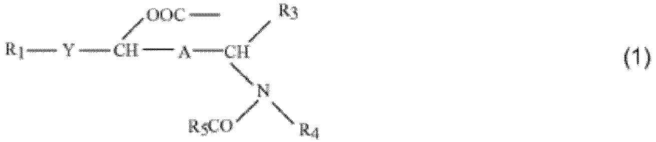 in which the abbreviations A, Y and R₁ and R₃ to R₅ have the following meanings:
A is a covalent bond or a saturated or unsaturated, straight-chain, branched or ring-containing hydrocarbon group,
Y is a covalent bond or a saturated or unsaturated, straight-chain, branched or ring-containing hydrocarbon group, which may have an oxygen atom on one of its ends, through which it is connected to R₁,
R₁ is a saturated or unsaturated, straight-chain or branched or ring-containing aliphatic group or a heterocyclic or aromatic group, which in all cases may be substituted or unsubstituted and/or the carbon chain of which can be interrupted by one or more groups B,
R₅ is selected from the group consisting of
(a) saturated and unsaturated, straight-chain and branched, substituted and unsubstituted aliphatic radicals, wherein individual C atoms may be replaced or substituted by oxygen atoms or carbonyl groups, wherein the carbon chains of these radicals may optionally be interrupted by a group B, and
(b) araliphatic, cycloaliphatic, aromatic and heterocyclic, unsubstituted or substituted radicals, the carbon chains of which may be interrupted by one or more groups B and/or by one or more groups D,
R₃, R₄ each independently represents hydrogen or an unsubstituted or substituted, straight-chain or branched or ring-containing aliphatic or an unsubstituted or substituted araliphatic substituent, the carbon chain of which may be interrupted by one or more groups B,
B is selected from among polymerizable or cross-linkable structural elements of the group composed of C₁-C₁₆-alkenyl, C₁-C₁₆-alkenyloxy, -C≡C-, -CH=CH-COO-, -CH=CH-,-CX=CH-COO- with X = C₁-C₁₆-alkyl and the trans-form of -OOC-CH=CH-COO-.
D is selected from -O-, -NH-, -N(CH₃)-, -N(C₂H₅)-, -SO₂- -CO-, -COO-, -CH = CH-, -OCOO-, -OCH₂-, CH=N, -CF₂CF₂-, as a chiral dopant, alone or in a mixture with one or more additional amino alcohols with a structural unit of formula (1) or in a mixture with another dopant, in a liquid crystal or a liquid crystal mixture.

2. Use according to claim 1, wherein the amino alcohol has the formula (2) 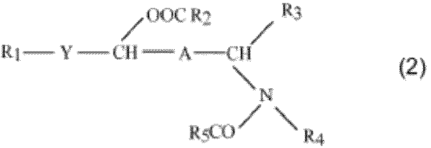 wherein the abbreviations A, Y, R₁ and R₃ to R₅ have the meanings as defined in claim 1 and R₂ is a monovalent or a divalent or polyvalent radical, selected from the group consisting of
(a) saturated and unsaturated, straight-chain and branched, substituted and unsubstituted aliphatic hydrocarbon radicals, wherein individual C atoms can be replaced or substituted by oxygen atoms or carbonyl groups, wherein the carbon chains of these radicals can optionally be interrupted by a group B as defined above, and
(b) araliphatic, cycloaliphatic, aromatic and heterocyclic, unsubstituted or substituted radicals, the carbon chains of which can be interrupted by one or more groups B and/or by one or more groups D as defined above,
wherein for the case in which R₂ is a divalent or polyvalent radical, this radical bears a second structural element or more than two structural elements of formula (1).

3. Use according to one of the preceding claims, in which one or both of the radicals R₂, R₅ have one or more araliphatic, cycloaliphatic, aromatic and/or heterocyclic structural element(s), wherein if several such structural elements are present, these are connected with one another directly or over a coupling group D as defined for claim 1.

4. Use according to one of the preceding claims, wherein R₂ and R₅ are selected from among the following radicals or contain several of these radicals: 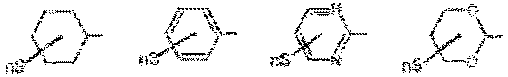 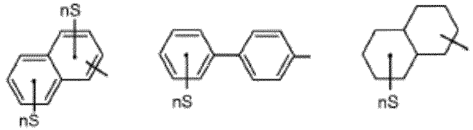 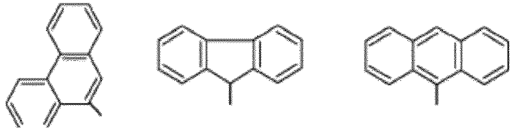 wherein n is 0 or 1 or an integer up to the number corresponding to the maximum number of possible substituents on the respective skeleton, and each substituent S independently from other substituents S is selected from among fluorine, chlorine, bromine, cyano, cyanomethyl, cyanoethyl, cyanoethenyl, dicyanoethenyl, bis(alkyloxycarbonyl)ethenyl, hydroxy, formyl, nitro and saturated or unsaturated, straight-chain or branched aliphatic groups with preferably 1-16 C atoms.

5. Use according to one of the preceding claims, wherein R₁-Y is a phenyl radical.

6. Use according to claim 1, wherein the chiral amino alcohol has the following formula (3): 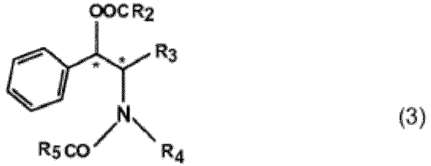 in which R₂ and R₅ designate the same or different cycloaliphatic, aromatic, heterocyclic or other substituents containing one or more of these structural elements, and which optionally are furnished with one or more radicals selected from among C₁-C₁₆-alkyl groups, and in which R₃ and R₄ are the same or different substituents, which indicate hydrogen or branched or unbranched alkyl or alkyloxy groups or benzyl or phenethyl radicals.

7. Use according to claim 2, wherein the radical R₂ contains exactly two structural elements of formula (1).

8. Use according to claim 7, in which the chiral amino alcohol of formula (2) has mirror symmetry.

9. Use according to claim 7 or 8, **characterized in that** R₂ has the meaning
L₁-F₁-L₂-F₂-L₃
wherein
L₁, L₂, L₃ are independently selected from the group consisting of a single covalent bond, straight chain or branched chain alkylene with 1-16 C atoms which is optionally substituted with OH, F, Cl, Br, CN or NO₂ and/or wherein individual CH₂ chain members can be replaced by O or S, and further consisting of -COO-, -CH = CH-, -CH=N-, -N=N-,-C≡C-, and
F₁ and F₂ are independently selected from the group consisting of a single bond and unsubstituted or substituted alicyclic, heterocyclic, and aromatic units.

10. Use according to one of the preceding claims, in which the doped liquid crystal of the doped liquid crystal mixture is used in an electro-optical system, especially in a display, and particularly preferably in a bistable reflective display.

11. Use according to claim 10, wherein two or a multiple of two liquid crystal mixtures are used in double-layered displays, wherein in each case two mixtures contain an enantiomer or diastereomer of an amino alcohol with a structural element of formula (1) according to one of the claims 1-9, such that the two mixtures have the opposite senses of rotation.

12. Substituted, chiral amino alcohol, comprising one or more structural units of the following formula (1) 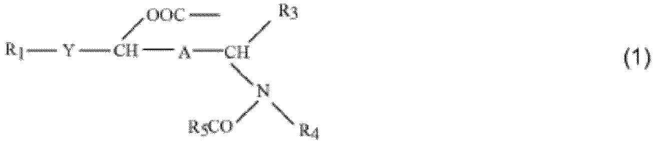 in which the abbreviations A, Y and R₁ and R₃ to R₅ have the following meanings:
A is a covalent bond or a saturated or unsaturated, straight-chain, branched or ring-containing hydrocarbon group,
Y is a covalent bond or a saturated or unsaturated, straight-chain, branched or ring-containing hydrocarbon group, which may have an oxygen atom on one of its ends, through which it is connected to R₁,
R₁ is a saturated or unsaturated, straight-chain or branched or ring-containing aliphatic radical or a heterocyclic or aromatic radical, which in all cases is substituted or unsubstituted and/or the carbon chain of which can be interrupted by one or more groups B,
R₅ is selected from the group consisting of
(a) araliphatic and cycloaliphatic unsubstituted or substituted radicals, the carbon chains of which may be interrupted by one or more groups B and/or by one or more groups D, and
(b) aromatic and heterocyclic groups substituted with one or more substituents selected from among cyano, cyanomethyl, cyanoethyl, cyanoethenyl, dicyanoethenyl, bis(alkyloxycarbonyl)ethenyl, hydroxy, formyl, nitro, unsaturated, straight-chain or branched aliphatic groups in which one or more C atoms may be replaced with oxygen atoms or carbonyl groups or substituted with halogen atoms and/or in which the aliphatic groups may be bound directly or over a coupling group, preferably selected from among O, NH, NCH₃, SO₂, CO, COO, OOC, CH=CH, C≡C, OCOO, CH=N, to the aromatic or heterocyclic radical, and saturated, straight-chain or branched aliphatic groups, in which C atoms are replaced by oxygen atoms or carbonyl groups or substituted with halogen atoms and/or in which the aliphatic group is bound to the aromatic or heterocyclic groups directly or through a coupling group selected from among O, NH, NCH₃, SO₂, CO, COO, OOC, CH=CH, C≡C, OCOO, CH=N,
R₃, R₄ each independently represent hydrogen or an unsubstituted or substituted, straight-chain or branched or ring-containing aliphatic substituent or an unsubstituted or substituted araliphatic substituent, the carbon chain of which may be interrupted by one or more groups B,
B is selected from among polymerizable or cross-linkable structural elements of the group comprising C₁-C₁₆-alkenyl, C₁-C₁₆-alkenyloxy, -C≡C-, -CH=CH-COO-, -CH=CH-,-CX=CH-COO- with X= C₁-C₁₆-alkyl and the trans-form of -OOC-CH=CH-COO-,
D is selected from -O-, -NH-, -N(CH₃)-, -N(C₂H₅)-, -SO₂-, -CO-, -COO-, -CH = CH-, -OCOO-, -OCH₂-, CH=N, -CF₂CF₂-.

13. Substituted, chiral amino alcohol according to claim 12, which has the formula (2): 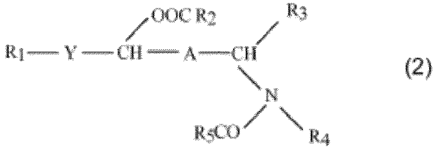 wherein the abbreviations A, Y, R₁ and R₃ to R₅ have the meanings as defined in claim 12 and R₂ is a monovalent or a divalent or polyvalent radical, selected from the group consisting of
(a) saturated and unsaturated, straight-chain and branched, substituted and unsubstituted aliphatic hydrocarbon radicals, wherein individual C atoms can be replaced by oxygen atoms or carbonyl groups, wherein the carbon chain of these radicals can optionally be interrupted by a group B as defined above, and
(b) araliphatic, cycloaliphatic, aromatic and heterocyclic, unsubstituted or substituted radicals, the carbon chain of which can be interrupted by one or more groups B and/or by one or more groups D as defined above,
wherein for the case in which R₂ is a divalent or polyvalent radical, this radical bears a second structural element or more than two structural elements of formula (1).

14. Substituted, chiral amino alcohol according to claim 13 with two structural elements of formula (2), **characterized in that** R₂ has the meaning
L₁-F₁-L₂-F₂-L₃
wherein
L₁, L₂, L₃ are independently selected from the group consisting of a single covalent bond, straight chain or branched chain alkylene with preferably 1-16 C atoms which is optionally substituted with OH, F, Cl, Br, CN or NO₂, and/or wherein individual CH₂ chain members can be replaced by O or S, and further consisting of -COO-, -CH = CH-,-CH=N, -N=N-, -C≡C-, and
F₁ and F₂ are independently selected from the group consisting of a single bond and unsubstituted or substituted alicyclic, heterocyclic, and aromatic units.

15. Substituted chiral amino alcohol according to claim 14, wherein the unsubstituted or substituted alicyclic, heterocyclic and aromatic units are selected under F₁ and F₂ independently of one another from among 1,4-cyclohexylene, 2,5-pyrimidylene, 1.4-phenylene and 2,6-naphthylene, and/or these units are substituted with at least one substituent selected from among F, Cl, Br, CN. NO₂.

## Revendications

1. Utilisation d'un alcool aminé substitué chiral, comprenant une ou plusieurs unité (s) de structure de la formule suivante (1) 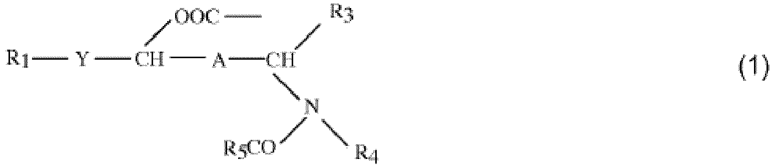 dans laquelle les abréviations A, Y, R₁ et R₃ à R₅ ont la signification suivante:
A est une liaison covalente ou un groupe hydrocarboné saturé ou insaturé, à chaîne droite, ramifié ou présentant un cycle,
Y est une liaison covalente ou un groupe hydrocarboné saturé ou insaturé, à chaîne droite, ramifié ou présentant un cycle, qui peut présenter à une de ses extrémités un atome d'oxygène, par lequel il est lié à R₁,
R₁ est un radical saturé ou insaturé, à chaîne droite ou ramifié ou un radical aliphatique présentant un cycle ou hétérocyclique ou aromatique, qui dans tous les cas est substitué ou non substitué et/ou dont la chaîne carbone peut être interrompue par un ou plusieurs groupe(s) B,
R₅ est sélectionné dans le groupe composé de
(a) radicaux aliphatiques saturés ou insaturés, à chaîne droite et ramifiés, substitués et non substitués, dans lesquels quelques atomes de carbone peuvent être remplacés par des atomes d'oxygène ou des groupes carbonyle, dans lequel la chaîne carbone de ces radicaux peut éventuellement être interrompue par un ou plusieurs groupe(s) B, et
(b) radicaux araliphatiques, cycloaliphatiques, aromatiques et hétérocycliques non substitués ou substitués, dont la chaîne carbone peut être interrompue par un ou plusieurs groupe (s) B et/ou par un ou plusieurs groupe(s) D,
R₃, R₄ représentent indépendamment l'un de l'autre un atome d'hydrogène ou un substituant non substitué ou substitué, à chaîne droite ou ramifié ou un substituant aliphatique présentant un cycle ou un substituant araliphatique non substitué ou substitué, dont la chaîne carbone peut être interrompue par un ou plusieurs groupe(s) B,
B est sélectionné parmi des éléments de structure polymérisables ou réticulables du groupe qui comprend C₁-C₁₆-alcényle, C₁-C₁₆-alcényloxy, -C≡C-, -CH=CH-COO-, -CH=CH-, -CX=CH-COO- avec X = C₁-C₁₆-alkyle et comprend la forme trans de -OOC-CH=CH-COO-,
D est sélectionné parmi -O-, -NH-, -N(CH₃)-, -N(C₂H₅)-, -SO₂-, -CO-, -COO-, -CH=CH-, -OCOO-, -OCH₂-, CH=N, -CF₂CF₂-,
comme dopant chiral, seul ou en mélange avec un ou plusieurs autre (s) alcool (s) aminés (s) avec une unité de structure de la formule (1) ou en mélange avec un autre dopant, dans un cristal liquide ou un mélange de cristaux liquides.

2. Utilisation selon la revendication 1, dans laquelle l'alcool aminé présente la formule (2): 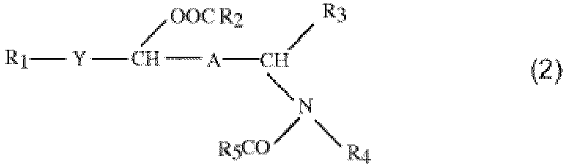 dans laquelle les abréviations A, Y, R₁ et R₃ à R₅ ont la signification définie dans la revendication 1 et
R₂ est un radical à liaison simple ou un radical à liaison double ou multiple, sélectionné dans le groupe composé de
(a) radicaux hydrocarbonés aliphatiques saturés et insaturés, à chaîne droite et ramifiés, substitués et non substitués, dans lequel quelques atomes de C peuvent être remplacés par des atomes d'oxygène ou des groupes carbonyle, dans lequel la chaîne carbone de ces radicaux peut éventuellement être interrompue par un groupe B comme défini plus haut, et
(b) des radicaux araliphatiques, cyclo-aliphatiques, aromatiques et hétérocycliques non substitués ou substitués, dont la chaîne carbone peut être interrompue par un ou plusieurs groupe(s) B et/ou par un ou plusieurs groupe(s) D comme défini plus haut,
dans laquelle, dans le cas où R₂ est un radical à liaison double ou multiple, ce radical porte un deuxième ou plus de deux élément(s) de structure de la formule (1).

3. Utilisation selon l'une quelconque des revendications précédentes, dans laquelle un ou les deux des radicaux R₂, R₅ présente(nt) un ou plusieurs élément(s) de structure araliphatique(s), cycloaliphatique(s), aromatique(s) et/ou hétérocyclique(s), dans lequel, en cas de présence de plusieurs de tels éléments de structure, ceux-ci sont liés l'un à l'autre directement ou par l'intermédiaire d'un groupe D comme défini dans la revendication 1.

4. Utilisation selon l'une quelconque des revendications précédentes, dans laquelle R₂ et R₅ sont sélectionnés parmi les radicaux suivants ou contiennent plusieurs de ces radicaux: 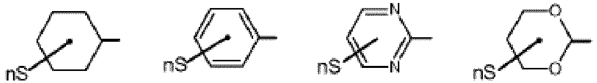 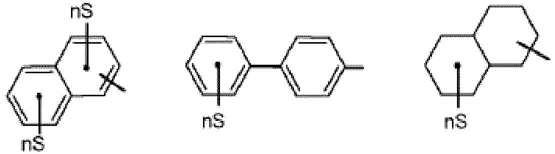 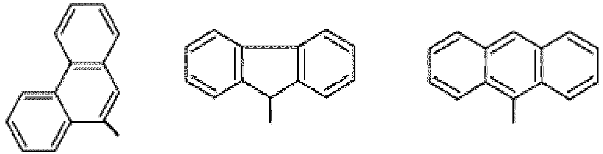 dans lesquels n est 0 ou 1 ou un nombre entier jusqu'au nombre, qui correspond à la quantité maximale de substituants possibles à la structure respective, et chaque substituant S est, indépendamment d'autres substituants S, sélectionné parmi fluor, chlore, brome, cyano, cyanométhyle, cyanoéthyle, cyanoéthényle, dicyanoéthényle, bis(alkyloxycarbonyl)éthényle, hydroxy, formyle, nitro et groupes aliphatiques saturés ou insaturés, à chaîne droite ou ramifiés, avec de préférence 1 - 16 atomes de carbone.

5. Utilisation selon l'une quelconque des revendications précédentes, dans laquelle R₁-Y- représente un radical phényle.

6. Utilisation selon la revendication 1, dans laquelle l'alcool aminé chiral présente la formule suivante (3): 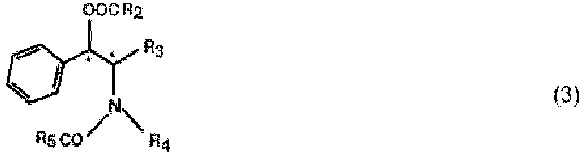 dans laquelle R₂ et R₅ désignent des substituants cycloaliphatiques, aromatiques, hétérocycliques identiques ou différents ou des substituants qui contiennent plusieurs de ces éléments de structure, et qui sont éventuellement pourvus d'un radical ou de plusieurs radicaux, sélectionné(s) parmi des groupes C₁-C₁₆-alkyle, et dans laquelle R₃ et R₄ sont des substituants identiques ou différents, qui désignent l'hydrogène ou des groupes alkyle ou alcoxy ramifiés ou non ramifiés ou des radicaux benzyle ou phénéthyle.

7. Utilisation selon la revendication 2, dans laquelle le radical R₂ présente exactement deux éléments de structure de la formule (1).

8. Utilisation selon la revendication 7, dans laquelle l'alcool aminé chiral de la formule (2) présente la symétrie axiale.

9. Utilisation selon la revendication 7 ou 8, **caractérisée en ce que** R₂ a la signification L₁-F₁-L₂-F₂-L₃, dans laquelle
L₁, L₂, L₃ sont sélectionnés indépendamment l'un de l'autre dans le groupe composé d'une liaison covalente simple, d'alkylène à chaîne droite ou ramifié avec 1 - 16 atomes de carbone, qui est en option substitué avec OH, F, Cl, Br, CN ou NO₂, et/ou dans lesquels quelques groupes CH₂ peuvent être remplacés par O ou S, -COO-,-CH=CH-, -CH=N-, -N=N-, -C≡C-, et
F₁ et F₂ sont sélectionnés indépendamment l'un de l'autre dans le groupe composé d'une liaison simple et d'unités alicycliques, hétérocycliques et aromatiques non substituées ou substituées.

10. Utilisation selon l'une quelconque des revendications précédentes, dans laquelle le cristal liquide dopé ou le mélange de cristaux liquides dopé est utilisé dans un système électrooptique, en particulier dans un écran d'affichage, et de préférence encore dans un écran d'affichage réflectif bistable.

11. Utilisation selon la revendication 10, dans laquelle on utilise deux ou un multiple de deux mélanges de cristaux liquides dans des écrans d'affichage à double couche, dont au moins deux contiennent chaque fois un énantiomère ou un diastéréomère d'un alcool aminé avec l'élément de structure de la formule (1) selon l'une quelconque des revendications 1 à 9, de telle manière que les deux mélanges présentent des sens de rotation opposés.

12. Alcool aminé substitué chiral, comprenant une ou plusieurs unité (s) de structure de la formule suivante (1) 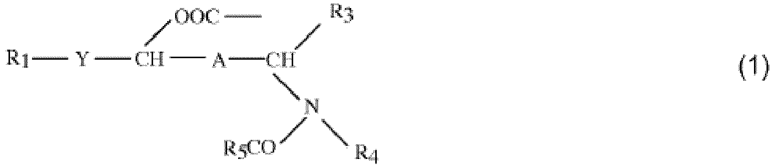 dans laquelle les abréviations A, Y, R₁ et R₃ à R₅ ont la signification suivante:
A est une liaison covalente ou un groupe hydrocarboné saturé ou insaturé, à chaîne droite, ramifié ou présentant un cycle,
Y est une liaison covalente ou un groupe hydrocarboné saturé ou insaturé, à chaîne droite, ramifié ou présentant un cycle, qui peut présenter à une de ses extrémités un atome d'oxygène, par lequel il est lié à R₁,
R₁ est un radical saturé ou insaturé, à chaîne droite ou ramifié ou un radical aliphatique présentant un cycle ou hétérocyclique ou aromatique, qui dans tous les cas est substitué ou non substitué et/ou dont la chaîne carbone peut être interrompue par un ou plusieurs groupe(s) B,
R₅ est sélectionné dans le groupe composé de
(a) radicaux araliphatiques et cycloaliphatiques, non substitués ou substitués, dont la chaîne carbone peut être interrompue par un ou plusieurs groupe(s) B et/ou par un ou plusieurs groupe(s) D, et
(b) radicaux aromatiques et hétérocycliques, qui sont substitués avec un ou plusieurs substituants, sélectionné(s) parmi cyano, cyanométhyle, cyanoéthyle, cyanoéthényle, dicyanoéthényle, bis(alkyloxycarbonyl)-éthényle, hydroxy, formyle, nitro, groupes aliphatiques insaturés, à chaîne droite ou ramifiés, dans lesquels un ou plusieurs atomes de carbone peut/peuvent être remplacé(s) par des atomes d'oxygène ou des groupes carbonyle ou qui peuvent être substitués avec des atomes d'halogène et/ou dans lesquels le groupe aliphatique peut être lié directement ou par l'intermédiaire d'un groupe de couplage, de préférence sélectionné parmi O, NH, NCH₃, SO₂, CO, COO, OOC, CH=CH, C≡C, OCOO, CH=N, au radical aromatique ou hétérocyclique, et des groupes aliphatiques saturés, à chaîne droite ou ramifiés, dans lesquels des atomes de carbone peuvent être remplacés par des atomes d'oxygène ou des groupes carbonyle ou sont substitués avec des atomes d'halogène et/ou dans lesquels le groupe aliphatique est lié directement ou par l'intermédiaire d'un groupe de couplage, sélectionné parmi O, NH, NCH₃, SO₂, CO, COO, OOC, CH=CH, C≡C, OCOO, CH=N, au radical aromatique ou hétérocyclique,
R₃, R₄ représentent indépendamment l'un de l'autre un atome d'hydrogène ou un substituant non substitué ou substitué, à chaîne droite ou ramifié ou un substituant aliphatique présentant un cycle ou un substituant araliphatique non substitué ou substitué, dont la chaîne carbone peut être interrompue par un ou plusieurs groupe(s) B,
B est sélectionné parmi des éléments de structure polymérisables ou réticulables du groupe qui comprend C₁-C₁₆-alcényle, C₁-C₁₆-alcényloxy, -C≡C-, -CH=CH-COO-, -CH=CH-, -CX=CH-COO- avec X = C₁-C₁₆-alkyle et comprend la forme trans de -OOC-CH=CH-COO-,
D est sélectionné parmi -O-, -NH-, -N(CH₃)-, -N(C₂H₅)-, -SO₂-, -CO-, -COO-, -CH=CH-, -OCOO-, -OCH₂-, CH=N, -CF₂CF₂-.

13. Alcool aminé substitué chiral selon la revendication 12, qui présente la formule (2): 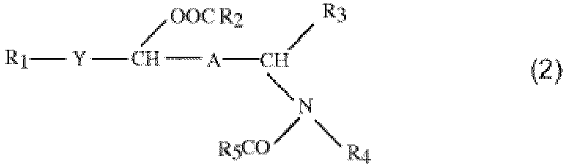 dans laquelle les abréviations A, Y, R₁ et R₃ à R₅ ont la signification définie dans la revendication 12 et
R₂ est un radical à liaison simple ou un radical à liaison double ou multiple, sélectionné dans le groupe composé de
(a) radicaux hydrocarbonés aliphatiques saturés et insaturés, à chaîne droite et ramifiés, substitués et non substitués, dans lequel quelques atomes de C peuvent être remplacés par des atomes d'oxygène ou des groupes carbonyle, dans lequel la chaîne carbone de ces radicaux peut éventuellement être interrompue par un groupe B comme défini plus haut, et
(b) des radicaux araliphatiques, cyclo-aliphatiques, aromatiques et hétérocycliques non substitués ou substitués, dont la chaîne carbone peut être interrompue par un ou plusieurs groupe(s) B et/ou par un ou plusieurs groupe(s) D comme défini plus haut, dans laquelle, dans le cas où R₂ est un radical à liaison double ou multiple, ce radical porte un deuxième ou plus de deux élément (s) de structure de la formule (1) .

14. Alcool aminé substitué chiral selon la revendication 13 avec deux éléments de structure de la formule (2), **caractérisé en ce que** R₂ a la signification L₁-F₁-L₂-F₂-L₃, dans laquelle
L₁, L₂, L₃ sont sélectionnés indépendamment l'un de l'autre dans le groupe composé d'une liaison covalente simple, d'alkylène à chaîne droite ou ramifié avec de préférence 1 - 16 atomes de carbone, qui est en option substitué avec OH, F, Cl, Br, CN ou NO₂, et/ou dans lesquels quelques groupes CH₂ peuvent être remplacés par O ou S, -COO-, -CH=CH-, -CH=N-, -N=N-, -C≡C-, et
F₁ et F₂ sont sélectionnés indépendamment l'un de l'autre dans le groupe composé d'une liaison simple et d'unités alicycliques, hétérocycliques et aromatiques non substituées ou substituées.

15. Alcool aminé substitué chiral selon la revendication 14, dans lequel les unités alicycliques, hétérocycliques et aromatiques non substituées ou substituées sous F₁ et F₂ sont sélectionnées indépendamment l'une de l'autre parmi 1,4-cyclohexylène, 2,5-pyrimidylène, 1,4-phénylène et 2,6-naphtylène, et/ou dans lequel ces unités sont substituées avec au moins un substituant, sélectionné parmi F, Cl, Br, CN, NO₂.
